# FASCICULE DE BREVET EUROPEEN

(11) **EP 3 437 927 B1**
(45) Date de publication et mention de la délivrance du brevet: **18.05.2022**
(21) Numéro de dépôt: 18184536.3
(22) Date de dépôt: 19.07.2018
(51) Int. Cl.: B60Q 3/76, B60Q 3/53, F21V 17/00, F21S 41/39

(54) **DISPOSITIF D'ÉCLAIRAGE CONFIGURABLE EN FONCTION DE SON ENDROIT D'INSTALLATION DANS UN VÉHICULE**
BELEUCHTUNGSVORRICHTUNG KONFIGURIERBAR IN ABHÄNGIGKEIT VON IHRER GEPLANTEN BEFESTIGUNGSPOSITION AUF EINEM FAHRZEUG.
LIGHTING DEVICE CONFIGURABLE DEPENDING ON ITS INTENDED MOUNTING POSITION ON A VEHICLE

(30) Priorité: 01.08.2017 FR 1757376
(43) Date de publication de la demande: 06.02.2019
(73) Titulaire: PSA Automobiles SA, 78300 Poissy (FR)
(72) Inventeur: ROYER, Guillaume, 91680 Bruyères-le-Châtel (FR); NORAIS, Marc, 78500 Sartrouville (FR); SCHNURIGER, Damien, 91300 Massy (FR)

(56) Documents cités:
- EP-A2- 2 299 171
- WO-A1-2013/034523
- CN-A- 101 907 264
- CN-Y- 201 269 482
- DE-B- 1 098 468
- KR-U- 19980 031 205
- US-A1- 2007 242 472
- US-A1- 2008 285 264
- US-A1- 2013 286 674
- US-A1- 2016 091 167

## Description

L'invention concerne les dispositifs d'éclairage intérieurs qui sont destinés à équiper certains véhicules, éventuellement de type automobile.

Certains véhicules comprennent au moins un élément auquel est solidarisé fixement au moins un dispositif d'éclairage intérieur.

Certains de ces dispositifs d'éclairage comprennent au moins une source de photons, comme par exemple une diode électroluminescente (ou LED), une pièce d'optique participant à la production d'un faisceau lumineux à partir de photons générés par la source de photons, et une paroi de support à laquelle sont couplées la source de photons et la pièce d'optique.

Selon la fonction assurée par le dispositif d'éclairage, la pièce d'optique peut, par exemple, être une lentille, un guide de lumière, un miroir, un collimateur ou un diffuseur.

Par ailleurs, la paroi de support peut, par exemple, être une plaque qui définit un couvercle et délimite avec un boîtier (solidarisé à un élément du véhicule) un logement dans lequel sont installées la source de photons et la pièce d'optique, ou bien une partie d'un boîtier solidarisé à un élément du véhicule et dans lequel sont installées la source de photons et la pièce d'optique.

Selon l'emplacement de la zone d'accueil qui doit bénéficier de la fonction assurée par le dispositif d'éclairage, la pièce d'optique peut avoir différentes positions relatives par rapport à la paroi de support. Cela résulte notamment du fait que le dispositif d'éclairage peut être installé en différents endroits dans un véhicule, comme par exemple sur/dans une garniture de pavillon (ou toit) ou une console de pavillon ou une console centrale ou une garniture de portière ou une planche de bord ou une boîte à gants ou encore un coffre, et que ces endroits peuvent varier selon que le véhicule a une conduite à droite ou à gauche.

Du fait de ces différentes positions relatives, on est actuellement contraint soit de réaliser différentes parois de support adaptées chacune à la solidarisation (et éventuellement l'indexage) d'une même pièce d'optique dans l'une de ces positions relatives, soit de réaliser différentes pièces d'optique adaptées chacune à leur solidarisation (éventuellement avec indexage) à une même paroi de support dans l'une de ces positions relatives.

La première alternative impose la réalisation d'autant de moules qu'il y a de déclinaisons différentes de la paroi de support, ce qui s'avère onéreux.

La seconde alternative peut rendre les pièces d'optique plus complexes du fait qu'elles doivent toutes être solidarisées à une même paroi de support, et impose la réalisation d'autant de moules qu'il y a de déclinaisons différentes de la pièce d'optique, ce qui s'avère onéreux.

De plus, dans ces deux alternatives la diversité de pièces optiques ou de parois de support complexifie la gestion des stocks et induit une augmentation de l'encombrement sur les chaines de production et de la durée moyenne d'assemblage des dispositifs d'éclairage du fait de l'accroissement des combinaisons possibles.

On connait notamment du document DE1098468, un dispositif d'éclairage conforme au préambule de la revendication 1.

Ce document n'apporte pas la souplesse souhaitée dans le choix de l'installation du dispositif d'éclairage dans le véhicule.

L'invention a donc notamment pour but d'améliorer la situation.

Elle propose notamment à cet effet un dispositif d'éclairage conforme à la revendication 1.,

On dispose ainsi d'un dispositif d'éclairage configurable à partir d'une même pièce d'optique et d'une même paroi de support, afin de pouvoir l'installer en différents endroits à l'intérieur d'un véhicule.

Le dispositif d'éclairage selon l'invention peut comporter d'autres caractéristiques qui peuvent être prises séparément ou en combinaison, et notamment :
- M peut être compris entre deux et quatre. Par exemple, M peut être égal à deux ;
- N peut être égal à deux ;
- sa pièce d'optique peut être choisie parmi une lentille, un guide de lumière, un collimateur et un diffuseur ;
- sa paroi de support peut être choisie parmi une plaque définissant un couvercle et délimitant avec un boîtier un logement dans lequel sont installées la source de photons et la pièce d'optique, et une partie d'un boîtier dans lequel sont installées la source de photons et la pièce d'optique ;
- les pions d'indexage peuvent assurer la solidarisation de la pièce d'optique à la paroi de support.

L'invention propose également un véhicule, éventuellement de type automobile, et comprenant :
- au moins un élément ayant une partie propre à servir de zone de solidarisation, et
- au moins un dispositif d'éclairage du type de celui présenté ci-avant et solidarisé fixement à la partie de cet élément.

Par exemple, l'élément peut être choisi parmi une garniture de pavillon, une console de pavillon, une console centrale, une garniture de portière, une planche de bord, une boîte à gants et un coffre.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, un exemple de réalisation d'un dispositif d'éclairage selon l'invention, configuré pour une installation dans un premier endroit d'un véhicule, et
- la figure 2 illustre schématiquement, dans une vue en perspective, le dispositif d'éclairage de la figure 1, configuré pour une installation dans un second endroit d'un véhicule.

L'invention a notamment pour but de proposer un dispositif d'éclairage DE configurable afin de pouvoir être installé en au moins deux endroits différents à l'intérieur d'un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule terrestre, maritime (ou fluvial), ou aérien, dès lors qu'il comprend au moins un élément pouvant supporter un dispositif d'éclairage intérieur.

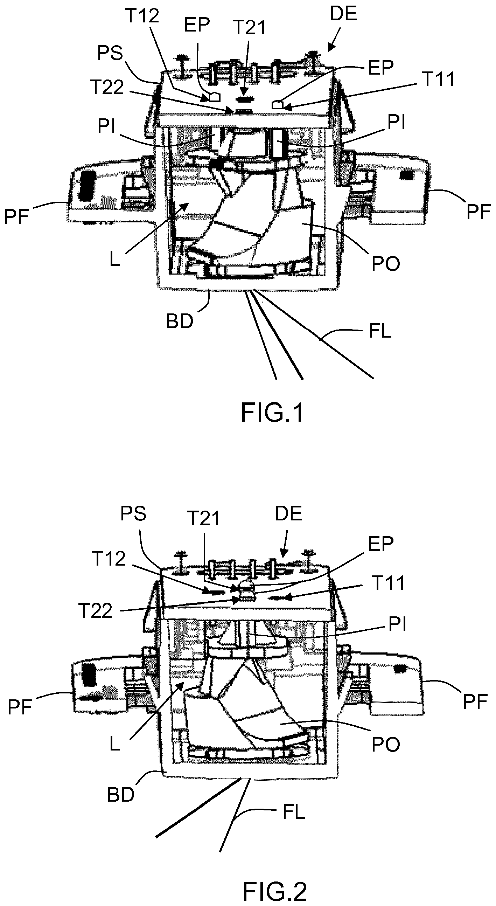

On a schématiquement représenté sur les figures 1 et 2 un même exemple (non limitatif) de dispositif d'éclairage DE selon l'invention, mais configuré de deux façons différentes afin de pouvoir être installé en deux endroits différents à l'intérieur d'un véhicule.

Comme illustré partiellement, un dispositif d'éclairage DE, selon l'invention, comprenant au moins une source de photons, une pièce d'optique PO et une paroi de support PS à laquelle sont couplées la/chaque source de photons et la pièce d'optique PO.

La/chaque source de photons peut, par exemple, comprendre au moins une diode électroluminescente (ou LED) ou au moins une diode laser ou encore au moins une ampoule.

La pièce d'optique PO est agencée de manière à participer à la production d'un faisceau lumineux FL à partir de photons générés par la/chaque source de photons.

Dans l'exemple non limitatif illustré sur les figures 1 et 2, le dispositif d'éclairage DE est une liseuse destinée à être solidarisée fixement à une garniture de plafonnier (ou toit) ou une console de plafonnier de l'habitacle du véhicule, et donc fournissant un faisceau lumineux FL faiblement divergeant et dont la direction principale est assez inclinée par rapport à la direction verticale (sensiblement perpendiculaire au plafonnier). Par conséquent, la pièce d'optique PO est ici une lentille.

Mais dans des variantes de réalisation adaptées à d'autres fonctions d'éclairage, la pièce d'optique PO pourrait être un guide de lumière, un miroir, un collimateur ou un diffuseur, par exemple. Il est rappelé qu'un collimateur est une pièce d'optique produisant un faisceau de très faible divergence (rayons quasiment parallèles), et qu'un diffuseur est une pièce d'optique diffusant les photons incidents, sans absorption, dans de nombreuses directions sans privilégier l'une de ces directions par rapport aux autres.

Par ailleurs, le dispositif d'éclairage DE pourrait être solidarisé fixement à une partie d'un autre élément qu'une garniture de plafonnier ou qu'une console de plafonnier. Ainsi, il pourrait également être solidarisé fixement à une partie d'une console centrale ou d'une garniture de portière ou d'une planche de bord ou d'une boîte à gants ou encore d'un coffre, par exemple.

Selon l'invention, la paroi de support PS comprend M ensembles de N trous Tjk (j = 1 à M et k = 1 à N), avec M ≥ 2 et N ≥ 2. Chaque ensemble j est associé à une position relative particulière de la pièce d'optique PO, choisie parmi M positions relatives et adaptée à une installation du dispositif d'éclairage DE dans l'un de M endroits différents.

Egalement selon l'invention, la pièce d'optique PO comprend N pions d'indexage PI qui comprennent des extrémités EP logées au moins partiellement et respectivement dans les N trous Tjk de l'un des M ensembles, choisi en fonction de l'endroit d'installation du dispositif d'éclairage DE.

On comprendra qu'une fois que l'on a choisi l'endroit où doit être installé un dispositif d'éclairage DE en cours d'assemblage et devant assurer une fonction choisie, on positionne l'unique pièce d'optique PO associée à cette fonction choisie dans la position relative, par rapport à l'unique paroi de support PS, qui correspond à cet endroit choisi. Ce positionnement relatif se fait en introduisant les N pions d'indexage PI de la pièce d'optique PO respectivement dans les N trous Tjk de l'ensemble j qui lui correspond.

Si l'on devait installer en un autre endroit le dispositif d'éclairage DE en cours d'assemblage, on positionnerait l'unique pièce d'optique PO dans une autre position relative, par rapport à l'unique paroi de support PS, qui correspond à cet autre endroit choisi. Cet autre positionnement relatif se ferait en introduisant les N pions d'indexage PI de la pièce d'optique PO respectivement dans les N trous Tj'k de l'ensemble j' (avec j' ≠ j) qui lui correspond.

Le dispositif d'éclairage DE est donc configurable de M façons différentes à partir d'une même pièce d'optique PO et d'une même paroi de support PS, afin de pouvoir être installé en M endroits différents à l'intérieur d'un véhicule.

Dans l'exemple non limitatif illustré sur les figures 1 et 2, le nombre M d'ensembles de N trous Tjk est égal à deux et le nombre N de trous Tjk de chaque ensemble j est aussi égal à deux. Par conséquent, le nombre de positions relatives différentes est égal à deux et le nombre de pions d'indexage PI de la pièce d'optique PO est égal à deux.

Dans le premier exemple de la figure 1, illustrant la première position relative de la pièce d'optique PO par rapport à l'unique paroi de support PS, l'un des deux pions PI est logé dans le trou T11 du premier ensemble (j = 1), et l'autre pion PI est logé dans le trou T12 de ce premier ensemble (j = 1). Cette première position relative est par exemple adaptée à l'éclairage d'une zone centrale du siège passager (à droite) d'un véhicule à conduite à gauche, lorsque le dispositif d'éclairage DE est solidarisé fixement à une garniture de pavillon ou une console de pavillon d'un habitacle du véhicule.

Dans le second exemple de la figure 2, illustrant la seconde position relative de la pièce d'optique PO par rapport à l'unique paroi de support PS, l'un des deux pions PI est logé dans le trou T21 du second ensemble (j = 2), et l'autre pion PI est logé dans le trou T22 de ce second ensemble (j = 2). Cette seconde position relative est par exemple adaptée à l'éclairage d'une zone centrale du siège conducteur (à gauche) d'un véhicule à conduite à gauche, lorsque le dispositif d'éclairage DE est solidarisé fixement à une garniture de pavillon ou une console de pavillon d'un habitacle du véhicule.

Mais le nombre M peut prendre n'importe quelle valeur supérieure ou égale à deux. En particulier, M peut être compris entre deux et quatre.

De même, le nombre N peut prendre n'importe quelle valeur supérieure ou égale à deux afin de permettre l'indexage et d'empêcher la rotation de la pièce d'optique PO par rapport à la paroi de support PS. Ainsi, il peut par exemple être égal à trois ou quatre.

On notera, comme illustré non limitativement sur les figures 1 et 2, que les pions d'indexage PI peuvent également assurer la solidarisation de la pièce d'optique PO à la paroi de support PS. Dans ce cas, la partie terminale de leur extrémité EP présente de préférence une forme en ogive avec un diamètre localement légèrement supérieur au diamètre de leur partie principale, de manière à être rentrée en force au travers des trous traversants Tjk concernés.

On notera également que dans l'exemple non limitatif illustré sur les figures 1 et 2 la paroi de support PS est une plaque qui définit un couvercle et délimite avec un boîtier BD un logement L dans lequel sont installées la source de photons et la pièce d'optique PO, ainsi que l'éventuelle carte électronique. Ce boîtier BD fait partie du dispositif d'éclairage DE et comprend, ici, deux pattes de fixation PF destinées à permettre sa solidarisation fixe à une partie d'un élément du véhicule au moyen de vis passant au travers de trous traversants qu'elles comprennent respectivement.

Cette plaque PS peut d'ailleurs être une carte électronique à laquelle est solidarisée fixement la/chaque source de photons, la pièce d'optique PO et des moyens de contrôle chargés de contrôler le fonctionnement de la/chaque source de photons. Cette carte électronique PS peut, par exemple, être une carte à circuits imprimés de type PCB (« Printed Circuit Board »).

Mais dans une variante de réalisation non illustrée, la paroi de support PS pourrait être une partie d'un boîtier dans lequel sont installées la source de photons et la pièce d'optique PO, ainsi que l'éventuelle carte électronique.

L'invention offre plusieurs avantages, parmi lesquels :
- elle évite d'avoir à réaliser des aménagements spécifiques (autres que les trous Tjk) sur la paroi de support PS, ce qui permet d'utiliser un unique moule plus simple,
- elle évite d'avoir à rajouter des pièces d'interface spécifiques, ce qui s'avère économique,
- elle permet une standardisation des couvercles et/ou boîtiers comprenant la paroi de support PS,
- elle permet d'augmenter la diversité des positions relatives à moindre coût,
- elle permet de simplifier la gestion des stocks et de réduire l'encombrement sur les chaines de production et la durée moyenne d'assemblage des dispositifs d'éclairage.

## Revendications

1. Dispositif d'éclairage (DE) pour un véhicule, ledit dispositif d'éclairage (DE) comprenant au moins une source de photons, une pièce d'optique (PO) participant à la production d'un faisceau lumineux (FL) dans une direction d'éclairage déterminée, à partir de photons générés par ladite source de photons, et une paroi de support (PS) à laquelle sont couplées ladite source de photons et ladite pièce d'optique (PO), ladite paroi de support (PS) comprenant M ensembles de N trous (Tjk), avec M ≥ 2 et N ≥ 2, chaque ensemble étant associé à une position relative particulière parmi M de ladite pièce d'optique (PO), adaptée à une installation dudit dispositif d'éclairage (DE) dans des endroits différents d'un véhicule, ladite pièce d'optique (PO) comprenant N pions d'indexage (PI) comprenant des extrémités (EP) logées au moins partiellement et respectivement dans les N trous (Tjk) de l'un desdits M ensembles, **caractérisé en ce que** le choix de l'un desdits ensemble M pour le positionnement de la pièce optique (PO) détermine la direction d'éclairage du faisceau lumineux (FL), chacun desdits M ensemble correspondant à une autre direction d'éclairage du faisceau lumineux (FL), ledit choix pouvant ainsi être fonction de l'endroit d'installation dudit dispositif d'éclairage (DE) dans un véhicule.

2. Dispositif selon la revendication 1, **caractérisé en ce que** M est compris entre deux et quatre.

3. Dispositif selon la revendication 2, **caractérisé en ce que** M est égal à deux.

4. Dispositif selon l'une des revendications 1 à 3, **caractérisé en ce que** N est égal à deux.

5. Dispositif selon l'une des revendications 1 à 4, **caractérisé en ce que** ladite pièce d'optique (PO) est choisie parmi une lentille, un guide de lumière, un miroir, un collimateur et un diffuseur.

6. Dispositif selon l'une des revendications 1 à 5, **caractérisé en ce que** ladite paroi de support (PS) est choisie parmi i) une plaque définissant un couvercle et délimitant avec un boîtier (BD) un logement (L) dans lequel sont installées ladite source de photons et ladite pièce d'optique (PO), et ii) une partie d'un boîtier dans lequel sont installées ladite source de photons et ladite pièce d'optique (PO).

7. Dispositif selon l'une des revendications 1 à 6, **caractérisé en ce que** lesdits pions d'indexage (PI) assurent la solidarisation de ladite pièce d'optique (PO) à ladite paroi de support (PS).

8. Véhicule comprenant au moins un élément ayant une partie propre à servir de zone de solidarisation, **caractérisé en ce qu'**il comprend en outre au moins un dispositif d'éclairage (DE) selon l'une des revendications précédentes, solidarisé fixement à ladite partie de l'élément.

9. Véhicule selon la revendication 8, **caractérisé en ce que** ledit élément est choisi parmi une garniture de pavillon, une console de pavillon, une console centrale, une garniture de portière, une planche de bord, une boîte à gants, et un coffre.

10. Véhicule selon la revendication 8 ou 9, **caractérisé en ce qu'**il est de type automobile.

## Patentansprüche

1. Beleuchtungsvorrichtung (DE) für ein Fahrzeug, wobei die Beleuchtungsvorrichtung (DE) mindestens eine Photonenquelle, ein optisches Teil (PO), das an der Erzeugung eines Lichtstrahls (FL) in einer bestimmten Beleuchtungsrichtung beteiligt ist, ausgehend von Photonen, die von der Photonenquelle erzeugt werden, umfasst, und eine Stützwand (PS), mit der die Photonenquelle und das optische Teil (PO) gekoppelt sind, wobei die Stützwand (PS) M Sätze von N Löchern (Tjk) umfasst, mit M ≥ 2 und N ≥ 2, wobei jeder Satz mit einer bestimmten relativen Position unter M des optischen Teils (PO) verbunden ist, geeignet für eine Installation der Beleuchtungsvorrichtung (DE) an verschiedenen Stellen eines Fahrzeugs, wobei das optische Teil (PO) N Indexstifte (PI) umfasst, die Enden (EP) aufweisen, die zumindest teilweise und jeweils in den N Löchern (Tjk) einer der M Sätze aufgenommen sind, **dadurch gekennzeichnet, dass** die Wahl einer der M Baugruppen für die Positionierung des optischen Teils (PO) die Beleuchtungsrichtung des Lichtstrahls (FL) bestimmt,wobei jede der M Baugruppen einer anderen Beleuchtungsrichtung des Lichtstrahls (FL) entspricht,wobei die Wahl somit abhängig vom Einbauort der Beleuchtungsvorrichtung (DE) in einem Fahrzeug sein kann.

2. Vorrichtung nach Anspruch 1, **dadurch gekennzeichnet, dass** M zwischen zwei und vier liegt.

3. Vorrichtung nach Anspruch 2, **dadurch gekennzeichnet, dass** M gleich zwei ist.

4. Vorrichtung nach einem der Ansprüche 1 bis 3, **dadurch gekennzeichnet, dass** N gleich zwei ist.

5. Vorrichtung nach einem der Ansprüche 1 bis 4, **dadurch gekennzeichnet, dass** das optische Teil (PO) aus einer Linse, einem Lichtleiter, einem Spiegel, einem Kollimator und einem Diffusor ausgewählt ist.

6. Vorrichtung nach einem der Ansprüche 1 bis 5, **dadurch gekennzeichnet, dass** die Stützwand (PS) ausgewählt ist aus i) einer Platte, die einen Deckel definiert und mit einem Gehäuse (BD) eine Aufnahme (L) abgrenzt, in der die Photonenquelle und das optische Teil (PO) installiert sind, und ii) einem Teil eines Gehäuses, in dem die Photonenquelle und das optische Teil (PO) installiert sind.

7. Vorrichtung nach einem der Ansprüche 1 bis 6, **dadurch gekennzeichnet, dass** die Indexstifte (PI) die feste Verbindung des Optikteils (PO) mit der Stützwand (PS) gewährleisten.

8. Fahrzeug mit mindestens einem Element, das einen Teil aufweist, der geeignet ist, als Verbindungszone zu dienen, **dadurch gekennzeichnet, dass** es außerdem mindestens eine Beleuchtungsvorrichtung (DE) nach einem der vorhergehenden Ansprüche umfasst, die fest mit dem Teil des Elements verbunden ist.

9. Fahrzeug nach Anspruch 8, **dadurch gekennzeichnet, dass** das Element ausgewählt ist aus einer Dachverkleidung, einer Dachkonsole, einer Mittelkonsole, einer Türverkleidung, einem Armaturenbrett, einem Handschuhfach und einem Kofferraum.

10. Fahrzeug nach Anspruch 8 oder 9, **dadurch gekennzeichnet, dass** es sich um ein Automobil handelt.

## Claims

1. Lighting device (DE) for a vehicle, said lighting device (DE) comprising at least one photon source, an optical part (PO) participating in the production of a light beam (FL) in a determined lighting direction, from photons generated by said photon source and a support wall (PS) to which said photon source and said piece of optics (PO) are coupled, said support wall (PS) comprising M sets of N holes (Tjk), with M ≥ 2 and N ≥ 2, each set being associated with a particular relative position among M of said piece of optics (PO) adapted to an installation of said lighting device (DE) in different locations of a vehicle, said piece of optics (PO) comprising N indexing pins (PI) comprising ends (EP) housed at least partially and respectively in the N holes (Tjk) of one of said M sets, **characterized in that** the choice of one of said M assemblies for positioning the optical part (PO) determines the direction of illumination of the light beam (FL),each of said M assemblies corresponding to another direction of illumination of the light beam (FL),said choice thus being able to be a function of the place of installation of said lighting device (DE) in a vehicle

2. Device according to claim 1, **characterized in that** M is between two and four.

3. The device of claim 2, wherein M is equal to two.

4. The device of any of claims 1 to 3, wherein N is equal to two.

5. The device according to any of claims 1 to 4, **characterized in that** said optical part (PO) is selected from a lens, a light guide, a mirror, a collimator and a diffuser.

6. Device according to one of claims 1 to 5, **characterized in that** said support wall (PS) is selected from i) a plate defining a cover and delimiting with a housing (BD) a housing (L) in which said photon source and said piece of optics (PO) are installed, and ii) a part of a housing in which said photon source and said piece of optics (PO) are installed.

7. Device according to one of claims 1 to 6, **characterized in that** said indexing pins (PI) ensure the attachment of said optical part (PO) to said support wall (PS).

8. A vehicle comprising at least one element having a portion suitable for serving as an attachment zone, **characterized in that** it further comprises at least one lighting device (DE) according to one of the preceding claims, fixedly attached to said portion of the element.

9. Vehicle according to claim 8, **characterized in that** said element is selected from a headliner, a roof console, a center console, a door liner, a dashboard, a glove box, and a trunk.

10. Vehicle according to claim 8 or 9, **characterized in that** it is of the automobile type.
